# FASCICULE DE BREVET EUROPEEN

(11) **EP 0 745 621 B1**
(45) Date de publication et mention de la délivrance du brevet: **15.04.1998**
(21) Numéro de dépôt: 96401065.6
(22) Date de dépôt: 15.05.1996
(51) Int. Cl.: C08F 228/02, G02B 1/04

(54) **Compositions polymérisables à base de monomères thio(méth)acrylates, compositions polymères transparentes obtenues, et leurs applications en optique**
Polymerisierbare Zusammensetzungen auf Basis von Thio(meth)acrylatmonomeren, transparente polymere Zusammensetzungen und deren optische Verwendung
Polymerisable composition based on thio(meth)acrylate monomer, transparent polymer compositions and their optical use

(30) Priorité: 31.05.1995 FR 9506443
(43) Date de publication de la demande: 04.12.1996
(73) Titulaire: ESSILOR INTERNATIONAL (COMPAGNIE GENERALE D'OPTIQUE), F-94227 Charenton cédex (FR)
(72) Inventeur: Jiang, Peiqi, Tokyo (JP)
(74) Mandataire: Casalonga, Axel

(56) Documents cités:
- EP-A- 0 273 661
- DE-A- 4 010 783

## Description

La présente invention concerne, de manière générale, des compositions polymérisables à base de monomères thio(méth) acrylates, conduisant à des compositions polymères transparentes présentant les propriétés requises pour leur application dans le domaine ophtalmique.

Il est connu, depuis longtemps, d'utiliser des matériaux polymères organiques pour l'obtention de lentilles ophtalmiques.

Un des matériaux les plus communément utilisés est obtenu par polymérisation du monomère CR 39® (diallylcarbonate de diéthylène glycol).

Il existe cependant, depuis quelques années, une demande grandissante pour des lentilles qui, tout en garantissant sensiblement les mêmes qualités optiques et les mêmes caractéristiques mécaniques que les lentilles en matériau polymère organique connu, présentent une plus faible épaisseur et sont donc plus légères.

Différents matériaux ont été développés pour répondre à cette demande. Ces nouveaux matériaux organiques présentent en général des indices de réfraction élevés pouvant atteindre, voire dépasser, des indices de réfraction n=1,6.

Ainsi, du fait de cet indice de réfraction élevé, il est possible de fabriquer des lentilles d'épaisseur plus faible pour un pouvoir correcteur (puissance optique) équivalent.

Une famille de monomères récemment testés pour l'obtention de matériaux dans le domaine ophtalmique, est la famille des thio(méth) acrylates.

Le brevet EP-A-273 661 décrit des monomères de type thio(méth) acrylates utiles dans le domaine de l'optique ophtalmique et le brevet EP-A-273 710 décrit des compositions polymérisables conduisant à des polymères organiques transparents, adaptés pour la réalisation de lentilles ophtalmiques. Ces compositions renferment un monomère possédant au moins un groupe thio(méth)acryloyle et au moins deux groupes (méth)acryloyles et, optionnellement, au moins un autre monomère copolymérisable par voie radicalaire.

Le brevet EP-A-273 710 décrit notamment des compositions à base de bis-(2-méthacryloyl thio éthyl) sulfure.

Ce brevet mentionne encore que les compositions polymérisables peuvent être polymérisées par voie thermique, par irradiation UV ou sous l'action d'un faisceau d'électrons.

Toutes les compositions données en exemple dans ce brevet sont polymérisées, soit par voie thermique pure (pendant plusieurs heures), soit par prépolymérisation par irradiation UV suivie d'une polymérisation thermique pour obtenir un article moulé durci.

La demande de brevet WO 90/04587 décrit des monomères 4,4'-bis[(méth)acryloyl thio phényl] sulfure et leur utilisation dans des compositions polymérisables, en combinaison avec un monomère vinylique copolymérisable et/ou des polythiols.

Il serait donc souhaitable de réaliser des compositions polymérisables permettant d'obtenir des compositions polymères durcies transparentes, présentant toutes les propriétés requises pour une application en optique ophtalmique.

En particulier, il serait souhaitable de réaliser des compositions polymérisables conduisant à des compositions polymères durcies présentant une transparence et un indice de réfraction élevés, par exemple un indice de réfraction supérieur à 1,55 et de préférence de l'ordre de 1,6, un nombre d'abbe élevé, une densité faible, une bonne aptitude à la coloration et une bonne résistance aux chocs.

Il serait également souhaitable que les compositions polymères durcies résistent bien au vieillissement et en particulier aient une bonne résistance à la dégradation par le rayonnement ultraviolet.

Il serait également souhaitable d'obtenir des compositions polymérisables conduisant à des compositions polymères transparentes utiles en optique ophtalmique, qui puissent être photopolymérisées dans des délais très courts, par exemple avec des temps d'irradiation de l'ordre de 3 à 5 minutes.

Un tel délai, très court, de formation et de durcissement de la composition polymère à partir des compositions polymérisables, est un avantage particulièrement intéressant sur le plan industriel, car il permet de réduire notablement les temps de fabrication et d'accroître la productivité.

La présente invention a donc pour objet de réaliser des compositions polymérisables ayant les avantages mentionnés ci-dessus et en particulier qui peuvent être photopolymérisées en un temps très court.

La présente invention a également pour objet les compositions polymères obtenues par polymérisation des compositions polymérisables.

La présente invention a également pour objet les articles d'optique fabriqués à partir des compositions polymères.

On atteint les objectifs ci-dessus, selon l'invention, en réalisant une composition polymérisable comprenant :
**a)** 10 à 70% en poids d'un monomère thio(méth)acrylate bifonctionnel, de formule (I) : 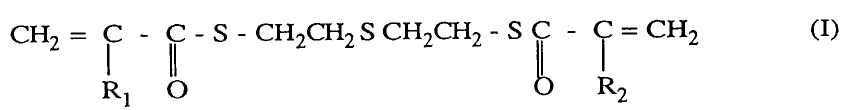 dans laquelle R₁ et R₂ désignent un atome d'hydrogène ou un radical -CH₃ ,
   ou d'un mélange d'au moins un monomère de formule (I) avec au moins un monomère de formule (II) : 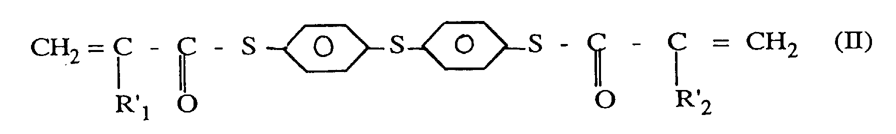 dans laquelle R'₁ et R'₂ désignent un atome d'hydrogène ou un radical -CH₃ ;
**b)** 10 à 60% en poids d'au moins un monomère de formule (III) : 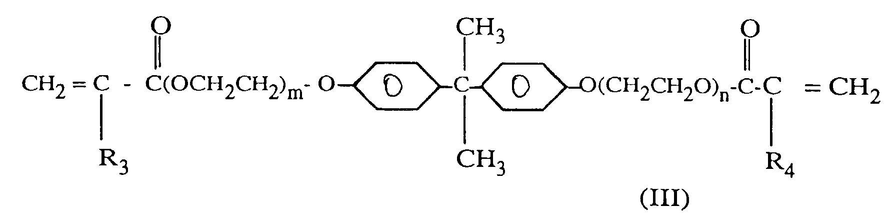 dans laquelle R₃ et R₄ désignent un atome d'hydrogène ou un radical -CH₃ et O ≤ m+n ≤ 10 ;
**c)** 5 à 30% en poids d'au moins un monomère mono(méth)acrylate aromatique ou cyclanique;
**d)** 0 à 15% en poids d'un polyalkylène glycoldi(méth)acrylate; et
**e)** 0 à 10% en poids d'un polythiol R(SH)ₙ dans lequel n est un entier variant de 2 à 6 et de préférence de 2 à 3, R est un groupement organique de valence égale à n, ou d'un mélange de ces polythiols;
par rapport au poids total de a) + b) + c) + d) + e).

De préférence, dans le constituant a), le monomère de formule (I) est le bis(2-méthacryloyl thio éthyl) sulfure et le monomère de formule (II) est le bis(4-méthacryloyl thio phényl) sulfure.

De préférence, également, le constituant a) de la composition polymérisable selon l'invention représente 20 à 60% en poids par rapport au poids total des composants a) à e).

De préférence, également, dans le constituant a), le monomère de formule (I) est le monomère majoritaire et il représente de préférence entre 50 et 100% en poids du constituant a).

Les monomères de formule (III) du constituant b) recommandés sont le 2,2-bis[4-(méth)acryloyloxyphényl]propane, le 2,2-bis[4-(ω (méth)acryloyloxypolyéthoxy)phényl]propane et en particulier les monomères de formule (III) dans laquelle R₃=R₄=CH₃ et m+n=2,6 (EBADMA), m+n=4 (DBADMA), m+n=10 (OBADMA).

Il est par ailleurs préférable, pour obtenir l'ensemble des caractéristiques avantageuses de l'invention, que les constituants a) et b) représentent, ensemble, entre 60 et 95% en poids par rapport au poids total des constituants a) à e).

De préférence, les monomères du constituant c) sont choisis parmi les monomères de formule (IV) : 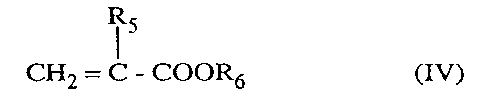 dans laquelle R₅ désigne l'hydrogène ou un radical -CH₃ ;
et R₆ représente un radical 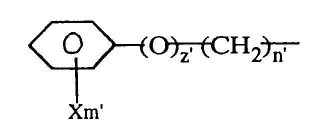 dans lequel n' est un entier de 0 à 3, m' est un entier de 1 à 5, z' est égal à 0 ou 1, à la condition que z' soit égal à 0 lorsque n' est égal à 0 et X représente un atome de chlore ou de brome;
ou un mélange de ces monomères.

Parmi les monomères mono(méth)acrylates cyclaniques du constituant c) des compositions polymérisables selon l'invention, on peut citer le cyclohexyl(méth)acrylate, le méthylcyclohexyl(méth) acrylate, l'(iso)bornyl(méth)acrylate, l'adamantyl(méth)acrylate et analogues, les méthacrylesters commercialisés par la Société HITACHI CHEMICAL CORPORATION sous la dénomination FA 513 M .

Le monomère mono(méth)acrylate cyclanique recommandé est l'(iso)bornyl(méth)acrylate.

Parmi les monomères mono(méth)acrylates aromatiques du constituant c) des compositions polymérisables selon la présente invention, on peut citer le phényl(méth)acrylate, le benzyl(méth) acrylate, le 1-naphtyl-(méth)acrylate, le fluorophényl(méth)acrylate, le chlorophényl(méth)acrylate, le bromophényl(méth)acrylate, le tribromophényl(méth)acrylate, le méthoxyphényl(méth)acrylate, le cyanophényl(méth)acrylate, le biphényl(méth)acrylate, le bromobenzyl(méth)acrylate, le tribromobenzyléthoxy(méth)acrylate, le phénoxyéthyl(méth)acrylate et leurs mélanges.

Les monomères mono(méth)acrylates aromatiques recommandés sont le tribromobenzylacrylate (TBrBA), le tribromobenzyléthoxyacrylate (TBrBEA), le benzylméthacrylate (BM), le phénylméthacrylate (BZ), le phénoxyéthylacrylate (AMP).

Comme indiqué, les compositions polymérisables selon l'invention peuvent éventuellement contenir jusqu'à 15% en poids d'un polyalkylèneglycol di(méth)acrylate.

Parmi ces polyalkylèneglycols di(méth)acrylates utiles dans la présente invention, on peut citer le polyéthylèneglycol di(méth) acrylate, le polypropylèneglycol di(méth)acrylate et le polybutylèneglycol di(méth)acrylate.

On recommande d'utiliser de préférence le polybutylèneglycol di(méth)acrylate.

Lorsqu'on utilise dans les compositions polymérisables selon l'invention le constituant d) facultatif, il est souhaitable, pour obtenir les indices de réfraction les plus élevés, que le constituant c) soit dans ce cas un monomère mono(méth)acrylate aromatique et de préférence un monomère mono(méth)acrylate aromatique porteur de groupements halogènes.

Parmi les polythiols du constituant e) de la composition selon la présente invention, on peut mentionner ceux décrits dans le brevet EP-A-394495, et les polythiols répondant aux formules suivantes : 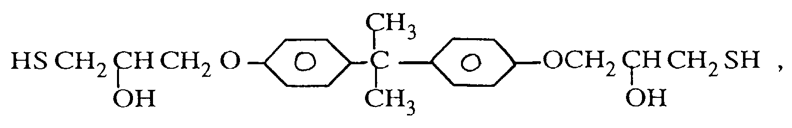 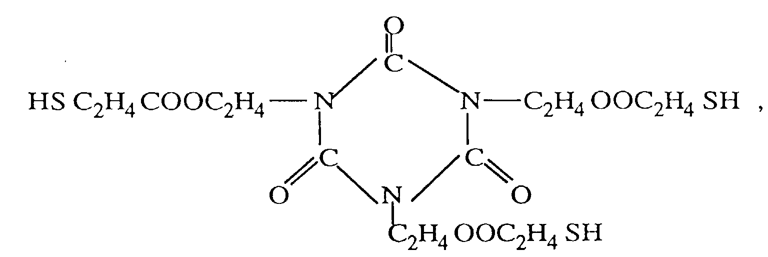 et

(HS CH₂ CH₂ COO CH₂)₃ C C₂ H₅ (TMTP).

On peut également utiliser des mélanges de ces polythiols.

L'adjonction du polythiol ou d'un mélange de ces polythiols permet notamment d'améliorer la résistance aux chocs des verres selon l'invention.

Les compositions polymérisables, selon l'invention, définies précédemment, peuvent encore comporter d'autres comonomères polymérisables, jusqu'à 10% en poids par rapport au poids total des constituants a) à e) et dont la présence ne modifie pas les propriétés globales des compositions polymères finales.

Toutefois, il est préférable que les constituants a) à e) soient les seuls monomères des compositions.

Les compositions polymérisables selon l'invention peuvent également renfermer des additifs classiquement utilisés dans des compositions polymérisables destinées au moulage d'articles d'optique, en particulier des lentilles ophtalmiques, dans les proportions classiques, à savoir des inhibiteurs, des colorants, des absorbeurs UV, des parfums, des déodorants, des agents antioxydants et des agents anti-jaune.

Les parfums permettent de masquer l'odeur des compositions, en particulier lors des opérations de surfaçage ou de détourage.

En effet, les articles moulés à partir des compositions polymérisables selon l'invention peuvent dégager, lors des opérations de surfaçage ou de détourage, des odeurs dues à la présence de composés soufrés (par exemple BMATES et BMATPS).

Il est possible de limiter considérablement ces odeurs en ayant recours à l'introduction de parfums dans la composition polymérisable de base. Cette technique est décrite par exemple dans la demande de brevet JP 90 210 301 A.

Une autre technique connue d'élimination des odeurs des compositions polymérisables lors des opérations de surfaçage ou de détourage, est décrite dans les demandes de brevet JP 04 068 085 et JP 61 09901, et consiste à utiliser, lors de ces opérations, une solution refroidissante contenant un parfum et/ou un déodorant.

Il est également possible, et souvent même préférable, d'utiliser ces deux techniques en combinaison.

On a également constaté, selon l'invention, qu'il était possible de réduire considérablement les odeurs lors des opérations ultérieures sur les articles moulés à partir des compositions polymérisables selon l'invention, lorsqu'on utilisait comme monomères soufrés un mélange de BMATES et de BMATPS, dans lequel la proportion de BMATES est inférieure ou égale à 30% en poids par rapport au poids total des composants a) à e), et de préférence inférieure ou égale à 20% en poids.

Les compositions selon l'invention renferment également généralement des initiateurs de polymérisation, de préférence des photoinitiateurs, dans les proportions de 0,001 à 5% en poids par rapport au poids total des constituants a) à e), et de préférence encore de 0,01 à 1%.

Les photoinitiateurs utilisables dans les compositions polymérisables selon l'invention sont, notamment, l'oxyde de 2,4,6-triméthylbenzoyldiphénylphosphine, la 1-hydroxycyclohexylphénylcétone, le 2,2-diméthoxy-1,2-diphényléthane-1-one, et les alkylbenzoïne éthers.

Les photoinitiateurs recommandés sont la 1-hydroxycyclohexylphénylcétone et l'oxyde de 2,4,6-triméthylbenzoyldiphénylphosphine.

La présente invention concerne également des compositions polymères transparentes obtenues par polymérisation, et en particulier par photopolymérisation, des compositions polymérisables décrites précédemment.

La polymérisation s'effectue de manière connue en utilisant un mélange initial contenant les divers monomères de la composition polymérisable et les éventuels adjuvants, la réaction de polymérisation étant catalysable en utilisant des catalyseurs tels que du péroxyde de benzoyle, du péroxydicarbonate de cyclohexyle, du péroxydicarbonate de diisopropyle ou le 2,2'-azobisbutyronitrile.

De préférence, la polymérisation est une photopolymérisation et dans ce cas, de préférence, les compositions polymérisables selon l'invention contiennent des photoinitiateurs comme indiqué ci-dessus.

De préférence, encore, cette photopolymérisation est une photopolymérisation par irradiation à la lumière ultraviolette.

L'invention concerne également des articles d'optique fabriqués à partir des compositions polymères selon l'invention, et en particulier des lentilles ophtalmiques et des verres de lunettes.

Les lentilles ophtalmiques peuvent être obtenues sous leur forme définitive par coulée des compositions polymérisables entre deux moules présentant les géométries de surface requises, puis polymérisation. On obtient alors une lentille dont les deux faces se trouvent dans leur état final.

On peut également fabriquer des lentilles semi-finies comportant, après moulage, une seule face à sa géométrie finale, la deuxième face pouvant alors être surfacée à la demande.

Les exemples suivants sont destinés à illustrer l'invention sans pour autant présenter un caractère limitatif.

Dans les exemples, sauf indication contraire, toutes les proportions des constituants sont exprimées en poids.

### EXEMPLES 1 à 11

On a préparé les compositions polymérisables en mélangeant les constituants indiqués dans le tableau I ci-après, dans les proportions indiquées dans ce tableau et en agitant les mélanges à 40°C. Les pourcentages en poids des photoinitiateurs sont des pourcentages par rapport au poids total des constituants a), b), c), d) et e). Les mélanges étaient ensuite filtrés et dégazés. On a, à partir de ces compositions polymérisables, fabriqué des lentilles en coulant le liquide obtenu dans un moule ayant une épaisseur au centre variable, constitué de deux parties de moule en verre minéral maintenues entre elles par un ruban adhésif à leur périphérie. Lorsqu'elle n'est pas spécifiée, l'épaisseur est de 1,5 mm. On a ensuite irradié les moules des deux côtés avec un rayonnement de 80 W/cm² produit par des lampes ultraviolettes pendant environ 3 minutes.

Après ce traitement, les lentilles formées étaient démoulées et soumises à un recuit de 120°C pendant 2 heures.

On a ensuite examiné les propriétés suivantes des lentilles obtenues : transmission, indice de réfraction, nombre d'Abbe, qualité optique de la surface, résistance aux chocs et résistance à la température. La qualité optique a été estimée visuellement, O désignant une surface sans défaut et X une surface présentant des défauts. La résistance aux chocs a été déterminée par la chute d'une bille métallique de 16 g (Exemples 1 à 10) ou de 22 g (Exemple 11) d'une hauteur de 1,27 m, au centre de la lentille, selon le protocole de la FOOD AND DRUG ADMINISTRATION. L'épaisseur au centre de la lentille est indiquée entre parenthèses. O signifie que la lentille est intacte après la chute de bille pour l'épaisseur au centre correspondante.

Les contraintes sont évaluées en observant visuellement la lentille sous lumière polarisée.

O signifie l'absence de contrainte.

X signifie la présence de contraintes.

La résistance à la température est déterminée par l'étude des lentilles après et avant recuit.

Absence de déformation géométrique O.

Présence de déformations X.

Les résultats sont donnés dans le tableau I ci-après.

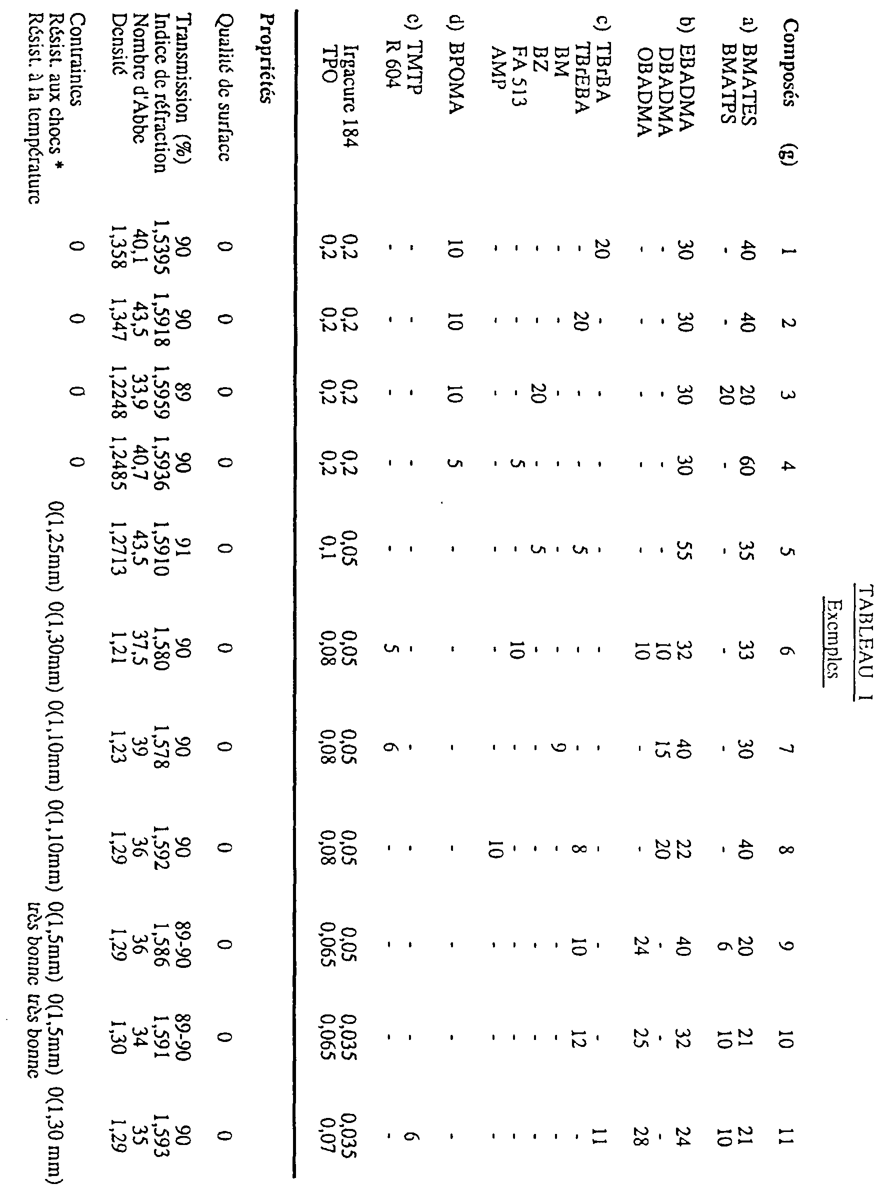

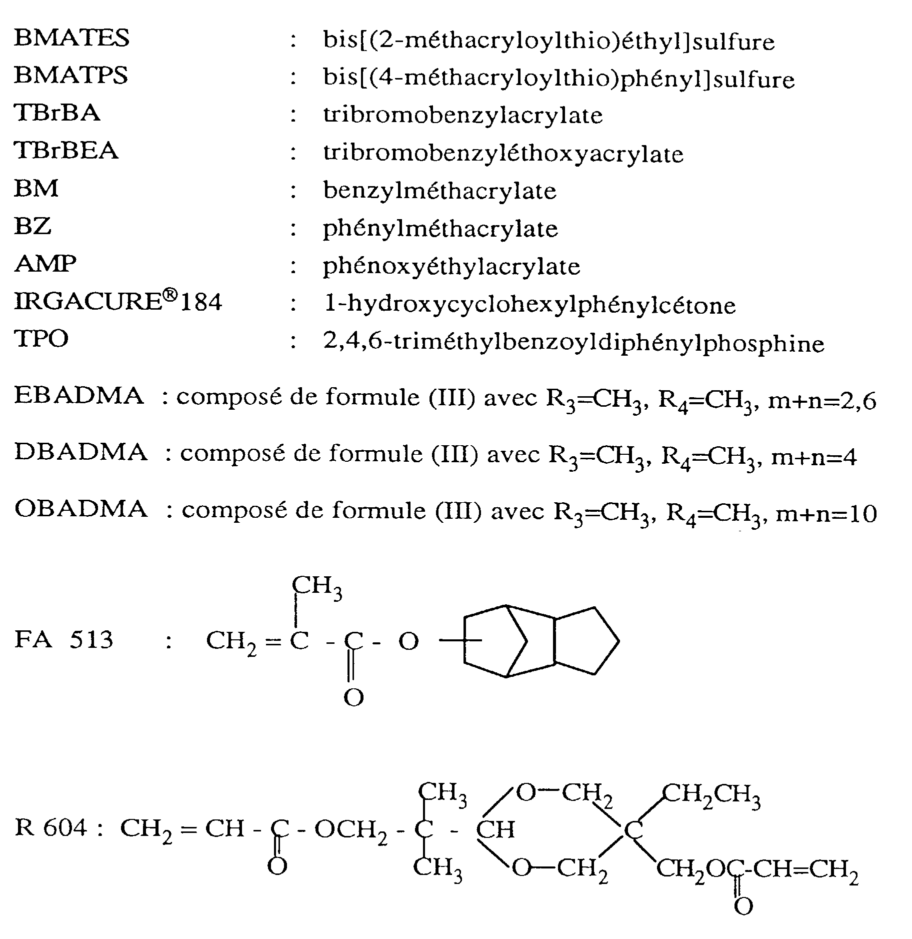

### EXEMPLE COMPARATIF

On a préparé, comme indiqué pour les exemples ci-dessus, une composition correspondant à l'exemple 19 du tableau III du brevet EP-A-273 710 et qui comprenait :

| | |
|---|---|
| BMATES | 50% en poids |
| Styrène | 40% en poids |
| Acrylonitrile | 10% en poids. |

Cette composition est dénommée ci-après : composition 1'.

On a ajouté à cette composition les mêmes photoinitiateurs que ceux utilisés dans les compositions de l'invention, dans les proportions suivantes :

| | |
|---|---|
| TPO | 0,08% en poids |
| Irgacure® 184 | 0,05% en poids. |

(les pourcents en poids de photoinitiateurs sont calculés par rapport au poids total des constituants monomériques de la composition).

On a soumis cette composition à une polymérisation et un durcissement par la lumière ultraviolette dans les mêmes conditions que les exemples 1 à 10, c'est-à-dire en utilisant une lampe à lumière ultraviolette fournissant une irradiation de 80W/cm² et une exposition sur les deux faces pendant 3 minutes.

On a obtenu les résultats suivants :
a) après une prépolymérisation de 10 secondes, la composition 1' se trouve toujours à l'état liquide.
b) après une polymérisation pendant 3 minutes, la composition 1' est toujours à l'état de gel.

Au contraire, pour une prépolymérisation pratiquée dans des conditions identiques, la composition de l'exemple 6 de l'invention,
a) après 10 secondes de prépolymérisation, se trouve sous forme de gel.
b) est durcie et se présente sous la forme d'une lentille démoulable après 3 minutes.

Cette comparaison montre que les compositions polymérisables selon l'invention se prêtent particulièrement bien à une prépolymérisation par voie photochimique.

## Revendications

1. Composition polymérisable, caractérisée en ce qu'elle comprend:
**a)** 10 à 70% en poids d'un monomère thio(méth)acrylate bifonctionnel, de formule (I) : 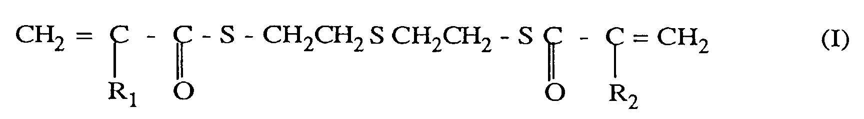 dans laquelle R₁ et R₂ désignent un atome d'hydrogène ou un radical -CH₃ ,
ou d'un mélange d'au moins un monomère de formule (I) avec au moins un monomère de formule (II) : 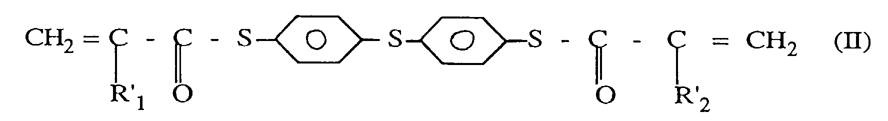 dans laquelle R'₁ et R'₂ désignent un atome d'hydrogène ou un radical -CH₃ ;
**b)** 10 à 60% en poids d'au moins un monomère de formule (III) : 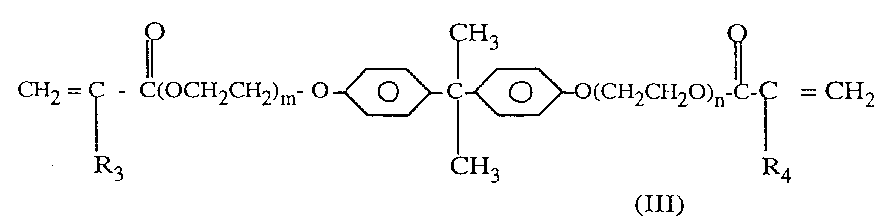 dans laquelle R₃ et R₄ désignent un atome d'hydrogène ou un radical -CH₃ et O ≤ m+n ≤ 10 ;
**c)** 5 à 30% en poids d'au moins un monomère mono(méth)acrylate aromatique ou cyclanique;
**d)** 0 à 15% en poids d'un polyalkylène glycoldi(méth)acrylate; et
**e)** 0 à 10% en poids d'un polythiol R(SH)ₙ, n est un entier pouvant prendre les valeurs de 2 à 6, R est un groupement organique de valence n, ou d'un mélange de ces polythiols;
par rapport au poids total de a) + b) + c) + d) + e).

2. Composition polymérisable selon la revendication 1, caractérisée en ce que le constituant a) représente 20 à 60% en poids, par rapport au poids total des constituants a) à e).

3. Composition polymérisable selon la revendication 1 ou 2, caractérisée en ce que dans le constituant a) le ou les monomères de formule (I) représentent 50 à 100% en poids du constituant a).

4. Composition polymérisable selon l'une quelconque des revendications 1 à 3, caractérisée en ce que les constituants a) et b) représentent, ensemble, 60 à 95% en poids, par rapport au poids total des constituants a) à e).

5. Composition polymérisable selon l'une quelconque des revendications 1 à 4, caractérisée en ce qu'elle comprend en outre jusqu'à 10% en poids par rapport au poids total de a) + b) + c) + d) + e), d'autres comonomères polymérisables ne nuisant pas aux propriétés des compositions polymères finales.

6. Composition polymérisable selon l'une quelconque des revendications 1 à 5, caractérisée en ce que le monomère de formule (I) est le bis[(2-méthacryloylthio)éthyl]sulfure.

7. Composition polymérisable selon l'une quelconque des revendications 1 à 6, caractérisée en ce que le monomère de formule (II) est le bis[(4-méthacryloylthio)phényl]sulfure.

8. Composition polymérisable selon l'une quelconque des revendications 1 à 7, caractérisée en ce que le constituant b) est choisi parmi l'éthoxybisphénol A diméthacrylate, le diéthoxybisphénol A diméthacrylate, le poly(oxyéthylène)bisphénol A diméthacrylate et leurs mélanges.

9. Composition polymérisable selon l'une quelconque des revendications 1 à 8, caractérisée en ce que le constituant c) est choisi parmi les monomères de formule (IV) : 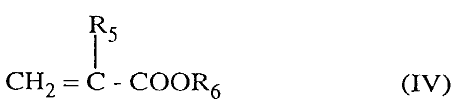 dans laquelle R₅ désigne un atome d'hydrogène ou un radical -CH₃ et R₆ est un radical de formule : 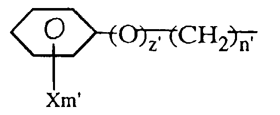 dans laquelle n' est un entier de 0 à 3, m' est un entier de 1 à 5, z' est égal à 0 ou 1, à la condition que z' soit égal à 0 lorsque n' est égal à 0 et X est un atome de chlore ou de brome,
ou un mélange de ceux-ci.

10. Composition polymérisable selon l'une quelconque des revendications 1 à 8, caractérisée en ce que le constituant c) est choisi parmi le cyclohexyl(méth)acrylate, le méthylcyclohexyl(méth)acrylate, l'(iso)bornyl(méth)acrylate, l'adamantyl(méth)acrylate, le phényl (méth)acrylate, le benzyl(méth)acrylate, le 1-naphtyl(méth)acrylate, le fluorophényl(méth)acrylate, le chlorophényl(méth)acrylate, le bromophényl(méth)acrylate, le tribromophényl(méth)acrylate, le méthoxyphényl(méth)acrylate, le cyanophényl(méth)acrylate, le biphényl (méth)acrylate, le bromobenzyl(méth)acrylate, le tribromobenzyl (méth)acrylate, le bromobenzyléthoxy(méth)acrylate, le tribromobenzyléthoxy(méth)acrylate, le phénoxyéthyl(méth)acrylate et leurs mélanges.

11. Composition polymérisable selon l'une quelconque des revendications 1 à 10, caractérisée en ce qu'elle comporte en outre 0,001 à 5% en poids par rapport au poids total des constituants a) à e) e) d'un initiateur de polymérisation.

12. Composition polymérisable selon la revendication 11, caractérisée en ce qu'elle comporte 0,01 à 1% en poids d'initiateur.

13. Composition polymérisable selon la revendication 11 ou 12, caractérisée en ce que l'initiateur de polymérisation est un photoinitiateur.

14. Composition polymérisable selon la revendication 13, caractérisée en ce que le photoinitiateur est choisi parmi l'oxyde de 2,4,6-triméthylbenzoyldiphénylphosphine, la 1-hydroxycyclohexylphénylcétone, le 2,2-diméthoxy-1,2-diphényléthane-1-one, les alkyl benzoïne éthers et leurs mélanges.

15. Composition polymère transparente résultant de la polymérisation de l'une quelconque des compositions polymérisables selon les revendications 1 à 14.

16. Composition polymère transparente résultant de la photopolymérisation d'une composition telle que définie dans la revendication 13 ou 14.

17. Article d'optique constitué d'une composition polymère selon la revendication 15 ou 16.

18. Article d'optique selon la revendication 17, consistant en une lentille ophtalmique.

19. Article d'optique selon la revendication 17, consistant en un verre de lunette.

## Patentansprüche

1. Polymerisierbare Zusammensetzung, dadurch gekennzeichnet, daß sie:
a) 10 bis 70 Gew.-% eines bifunktionellen Thio(meth)acrylat-monomers der Formel (I): 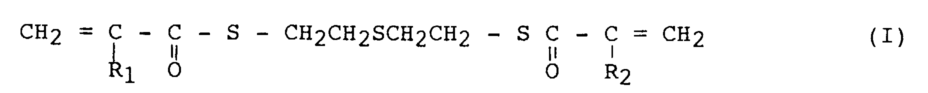 in welcher R₁ und R₂ ein Wasserstoffatom oder einen -CH₃-Rest bezeichnen,
oder einer Mischung aus mindestens einem Monomer der Formel (I) mit mindestens einem Monomer der Formel (II): 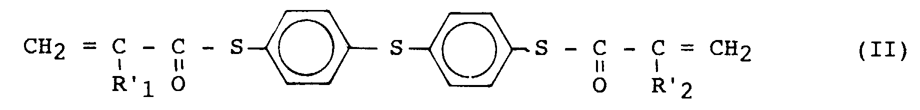 in welcher R'₁ und R'₂ ein Wasserstoffatom oder einen -CH₃-Rest bezeichnen;
b) 10 bis 60 Gew.-% von mindestens einem Monomer der Formel (III): 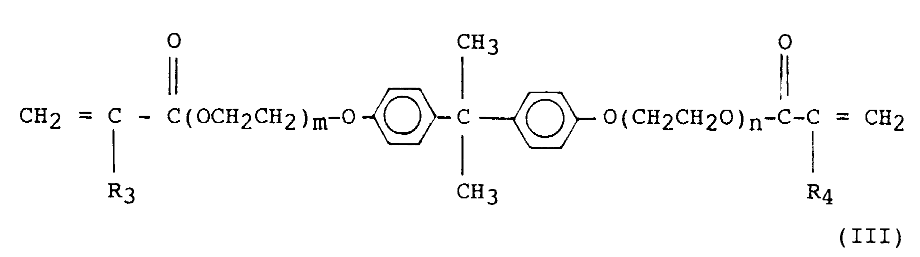 in welcher R₃ und R₄ ein Wasserstoffatom oder einen -CH₃-Rest bedeuten und 0 ≤ m+n ≤ 10 ist;
c) 5 bis 30 Gew.-% von mindestens einem aromatischen oder cyclanischen Mono(meth)acrylatmonomer;
d) 0 bis 15 Gew.-% eines Polyalkylenglykoldi(meth)acrylats; und
e) 0 bis 10 Gew.-% eines Polythiols R(SH)ₙ, wobei n eine ganze Zahl ist, welche die Werte von 2 bis 6 annehmen kann, R eine organische Gruppe mit der Wertigkeit n ist, oder einer Mischung aus diesen Polythiolen;
in bezug auf das Gesamtgewicht von a) + b) + c) + d) + e) umfaßt.

2. Polymerisierbare Zusammensetzung nach Anspruch 1, dadurch gekennzeichnet, daß der Bestandteil a) 20 bis 60 Gew.-% in bezug auf das Gesamtgewicht der Bestandteile a) bis e) darstellt.

3. Polymerisierbare Zusammensetzung nach Anspruch 1 oder 2, dadurch gekennzeichnet, daß in dem Bestandteil a) das oder die Monomere der Formel (I) 50 bis 100 Gew.-% des Bestandteils a) darstellen.

4. Polymerisierbare Zusammensetzung nach einem der Ansprüche 1 bis 3, dadurch gekennzeichnet, daß die Bestandteile a) und b) gemeinsam 60 bis 95 Gew.-% in bezug auf das Gesamtgewicht der Bestandteile a) bis e) darstellen.

5. Polymerisierbare Zusammensetzung nach einem der Ansprüche 1 bis 4, dadurch gekennzeichnet, daß sie darüberhinaus bis zu 10 Gew.-% in bezug auf das Gesamtgewicht von a) + b) + c) + d) + e) von anderen polymerisierbaren Comonomeren umfaßt, welche die Eigenschaften der polymeren Endzusammensetzungen nicht nachhaltig beeinflussen.

6. Polymerisierbare Zusammensetzung nach einem der Ansprüche 1 bis 5, dadurch gekennzeichnet, daß das Monomer der Formel (I) das Bis[(2-methacryloylthio)ethyl]sulfid ist.

7. Polymerisierbare Zusammensetzung nach einem der Ansprüche 1 bis 6, dadurch gekennzeichnet, daß das Monomer der Formel (II) das Bis[(4-methacryloylthio)phenyl]sulfid ist.

8. Polymerisierbare Zusammensetzung nach einem der Ansprüche 1 bis 7, dadurch gekennzeichnet, daß der Bestandteil b) aus Ethoxybisphenol-A-dimethacrylat, Diethoxybisphenol-A-dimethacrylat, Poly(oxyethylen)bisphenol-A-dimethacrylat und deren Mischungen gewählt ist.

9. Polymerisierbare Zusammensetzung nach einem der Ansprüche 1 bis 8, dadurch gekennzeichnet, daß der Bestandteil c) aus den Monomeren der Formel (IV): 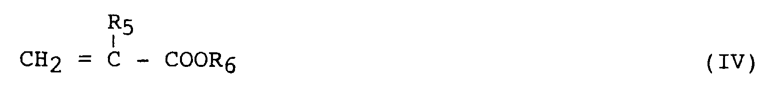 gewählt ist, in welcher R₅ ein Wasserstoffatom oder einen -CH₃-Rest bezeichnet und R₆ ein Rest der Formel: 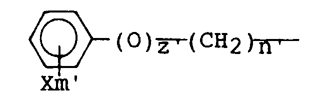 ist, in welcher n' eine ganze Zahl von 0 bis 3 ist, m' eine ganze Zahl von 1 bis 5 ist, z' gleich 0 oder 1 ist, mit der Bedingung, daß z' gleich 0 ist, wenn n' gleich 0 ist, und X ein Chlor- oder Bromatom ist,
oder eine Mischung von diesen.

10. Polymerisierbare Zusammensetzung nach einem der Ansprüche 1 bis 8, dadurch gekennzeichnet, daß der Bestandteil c) aus Cyclohexyl(meth)acrylat, Methylcyclohexyl(meth)acrylat, (Iso)bornyl(meth)acrylat, Adamantyl(meth)acrylat, Phenyl-(meth)acrylat, Benzyl(meth)acrylat, 1-Naphthyl(meth)acrylat, Fluorphenyl(meth)acrylat, Chlorphenyl(meth)acrylat, Bromphenyl(meth)acrylat, Tribromphenyl(meth)acrylat, Methoxyphenyl-(meth)acrylat, Cyanophenyl(meth)acrylat, Biphenyl(meth)acrylat, Brombenzyl(meth)acrylat, Tribrombenzyl(meth)acrylat, Brombenzylethoxy(meth)acrylat, Tribrombenyzlethoxy(meth)acrylat, Phenoxyethyl(meth)acrylat und deren Mischungen gewählt ist.

11. Polymerisierbare Zusammensetzung nach einem der Ansprüche 1 bis 10, dadurch gekennzeichnet, daß sie darüberhinaus 0,001 bis 5 Gew.-% in bezug auf das Gesamtgewicht der Bestandteile a) bis e) eines Polymerisationsinitiators umfaßt.

12. Polymerisierbare Zusammensetzung nach Anspruch 11, dadurch gekennzeichnet, daß sie 0,01 bis 1 Gew.-% des Initiators umfaßt.

13. Polymerisierbare Zusammensetzung nach Anspruch 11 oder 12, dadurch gekennzeichnet, daß der Polymerisationsinitiator ein Fotoinitiator ist.

14. Polymerisierbare Zusammensetzung nach Anspruch 13, dadurch gekennzeichnet, daß der Fotoinitiator aus 2,4,6-Trimethylbenzoyldiphenylphosphinoxid, 1-Hydroxycyclohexylphenylketon, 2,2-Dimethoxy-1,2-diphenylethan-1-on, Alkylbenzoylethern und deren Mischungen gewählt ist.

15. Transparente Polymerzusammensetzung, welche aus der Polymerisation von irgendeiner der polymerisierbaren Zusammensetzungen gemäß den Ansprüchen 1 bis 14 resultiert.

16. Transparente Polymerzusammensetzung, welche aus der Fotopolymerisation von einer der Zusammensetzungen, wie sie in den Ansprüchen 13 oder 14 definiert ist, resultiert.

17. Optischer Gegenstand, bestehend aus einer Polymerzusammensetzung nach einem der Ansprüche 15 oder 16.

18. Optischer Gegenstand nach Anspruch 17, bestehend aus einer ophthalmischen Linse.

19. Optischer Gegenstand nach Anspruch 17, bestehend aus einem Brillenglas.

## Claims

1. Polymerizable composition characterized in that it includes:
a) 10 to 70 % by weight of a difunctional thio(meth)acrylate monomer, of formula (I): 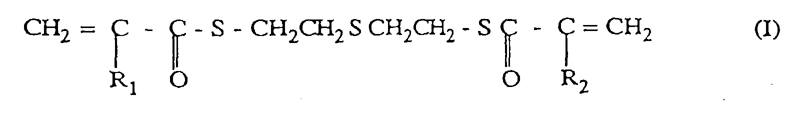 in which R₁ and R₂ denote a hydrogen atom or a radical -CH₃,
or of a mixture of at least one monomer of formula (I) with at least one monomer of formula (II): 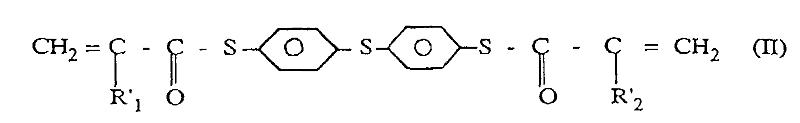 in which R'₁ and R'₂ denote a hydrogen atom or a radical -CH₃;
b) 10 to 60 % by weight of at least one monomer of formula (III): 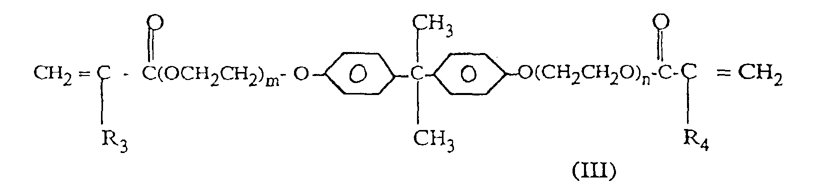 in which R₃ and R₄ denote a hydrogen atom or a radical -CH₃ and 0 ≤ m + n ≤ 10;
c) 5 to 30 % by weight of at least one aromatic or cyclane mono(meth)acrylate monomer;
d) 0 to 15 % by weight of a polyalkylene glycol di(meth)acrylate; and
e) 0 to 10 % by weight of a polythiol R(SH)ₙ, n is an integer which can assume the values from 2 to 6, R is an organic group of valency n, or a mixture of these polythiols;
relative to the total weight of a) + b) + c) + d) + e).

2. Polymerizable composition according to Claim 1, characterized in that the constituent a) represents 20 to 60 % by weight, relative to the total weight of the constituents a) to e).

3. Polymerizable composition according to Claim 1 or 2, characterized in that in the constituent a) the monomer(s) of formula (I) represent 50 to 100 % by weight of the constituent a).

4. Polymerizable composition according to any one of Claims 1 to 3, characterized in that the constituents a) and b) together represent 60 to 95 % by weight, relative to the total weight of the constituents a) to e).

5. Polymerizable composition according to any one of Claims 1 to 4, characterized in that it additionally includes up to 10 % by weight relative to the total weight of a) + b) + c) + d) + e) of other polymerizable comonomers which do not impair the properties of the final polymer compositions.

6. Polymerizable composition according to any one of Claims 1 to 5, characterized in that the monomer of formula (I) is bis[(2-methacryloylthio)ethyl] sulphide.

7. Polymerizable composition according to any one of Claims 1 to 6, characterized in that the monomer of formula (II) is bis[(4-methacryloylthio)phenyl] sulphide.

8. Polymerizable composition according to any one of Claims 1 to 7, characterized in that the constituent b) is chosen from ethoxybisphenol A dimethacrylate, diethoxybisphenol A dimethacrylate, poly(oxyethylene)bisphenol A dimethacrylate and mixtures thereof.

9. Polymerizable composition according to any one of Claims 1 to 8, characterized in that the constituent c) is chosen from the monomers of formula (IV): 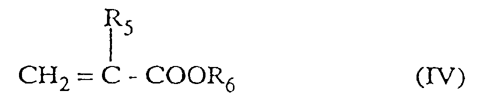 in which R₅ denotes a hydrogen atom or a radical -CH₃ and R₆ is a radical of formula: 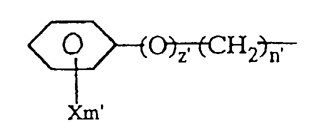 in which n' is an integer from 0 to 3, m' is an integer from 1 to 5, z' is equal to 0 or 1, on condition that z' is equal to 0 when n' is equal to a 0 and X is a chlorine or bromine atom,
or a mixture thereof.

10. Polymerizable composition according to any one of Claims 1 to 8, characterized in that the constituent c) is chosen from cyclohexyl (meth)acrylate, methylcyclohexyl (meth)acrylate, (iso)bornyl (meth)-acrylate, adamantyl (meth)acrylate, phenyl (meth)acrylate, benzyl (meth)acrylate, 1-naphthyl (meth)acrylate, fluorophenyl (meth)acrylate, chlorophenyl (meth)acrylate, bromophenyl (meth)acrylate, tribromophenyl (meth)acrylate, methoxyphenyl (meth) acrylate, cyanophenyl (meth) acrylate, biphenyl (meth)acrylate, bromobenzyl (meth)acrylate, tribromobenzyl (meth)acrylate, bromobenzylethoxy (meth)acrylate, tribromobenzylethoxy (meth)acrylate, phenoxyethyl (meth)acrylate and mixtures thereof.

11. Polymerizable composition according to any one of Claims 1 to 10, characterized in that it additionally comprises 0.001 to 5 % by weight relative to the total weight of the constituents a) to e) of a polymerization initiator.

12. Polymerizable composition according to Claim 11, characterized in that it comprises 0.01 to 1 % by weight of initiator.

13. Polymerizable composition according to Claim 11 or 12, characterized in that the polymerization initiator is a photoinitiator.

14. Polymerizable composition according to Claim 13, characterized in that the photoinitiator is chosen from 2,4,6-trimethylbenzoyldiphenylphosphine oxide, 1-hydroxycyclohexyl phenyl ketone, 2,2-dimethoxy-1,2-diphenylethan-1-one, alkyl bezoin ethers and mixtures thereof.

15. Transparent polymer composition resulting from the polymerization of any one of the polymerizable compositions according to Claim 1 to 14.

16. Transparent polymer composition resulting from the photopolymerization of a composition as defined in Claim 13 or 14.

17. Optical article consisting of a polymer composition according to Claim 15 or 16.

18. Optical article according to Claim 17, consisting of an ophthalmic lens.

19. Optical article according to Claim 17, consisting of a spectacle glass.
